# EUROPÄISCHE PATENTANMELDUNG

(11) **EP 0 897 862 A2**
(43) Veröffentlichungstag der Anmeldung: **24.02.1999**
(21) Anmeldenummer: 98115059.2
(22) Anmeldetag: 11.08.1998
(51) Int. Cl.: B64D 11/00

(54) **Einrichtung zur Verpflegung von Passagieren auf Flughäfen**

(30) Priorität: 16.08.1997 DE 19735508; 04.08.1998 DE 29813835 U
(71) Anmelder: Rabels, Peter, 22179 Hamburg (DE)
(72) Erfinder: Rabels, Peter, 22179 Hamburg (DE)
(74) Vertreter: Richter, Werdermann & Gerbaulet

(57) **Zusammenfassung**

Für die Durchführung eines wirtschaftlichen Flugbetriebes, insbesondere im Kurzstreckenbereich ist eine Einrichtung zur Verpflegung von Passagieren auf Flughäfen mit einer Flughafenanlage (100) mit einem Passagier-Abfertigungs- und Wartebereich (16), einem Rollfeld (14), auf dem Fluggeräte (18) abstellbar sind, und einem Boardingbereich zwischen dem Passagier-Abfertigungs- und Wartebereich (16) und dem Fluggerät (18), vorgesehen, wobei die Einrichtungen (28) zum Zuführen von Verpflegung, wie Lebensmitteln und/oder für die Passagiere im Boardingbereich aus Verpflegung aufnehmenden Trageboxen (50) bestehen, die an Bord des Fluggerätes bis nach dessen Landung verbleibend am Sitz (60) im Innenraum des Fluggerätes gehaltert sind.

## Beschreibung

Die Erfindung betrifft eine Einrichtung Zur Verpflegung von Passagieren auf Flughäfen gemäß dem Oberbegriff des Anspruches 1.

Beim Durchführen von Passagierflügen wird in der Regel vom Flugbegleitpersonal eine Bordverpflegung ausgegeben. Insbesondere bei Kurzstreckflügen, beispielsweise bis 2,5 h Flugzeit innerhalb Europas, ergibt sich jedoch das Problem, daß der Kostenanteil dieser Bordverpflegung an den Gesamtkosten der Fluggesellschaft für die Flugdurchführung erheblich und dementsprechend kaum wirtschaftlich ist.

Hinzu kommt, daß sich die Verteilung der Verpflegung während des Fluges unter Verwendung von Verpflegung in einzelnen Portionen aufnehmenden Fahrcontainern oftmals wegen der langen Fahrwege in den Gängen zwischen den Sitzreihen schwierig gestaltet, insbesondere auch dann, wenn auf Kurzstrecken Flugzeuge für eine große Passagieranzahl eingesetzt werden und hierfür die entsprechende Anzahl von Fahrcontainern für die Ausgabe zur Verfügung stehen müssen. Des weiteren ist es nach beendeter Verpflegungsausgabe vor Beginn des Landeanfluges erforderlich, die Verpackungsreste, Geschirr, Bestecke, Servietten, Gläser u. dgl. einzusammeln. Auch für diesen Vorgang muß Bordpersonal zur Verfügung stehen. Der Bordservice ist hiernach sehr arbeitsaufwendig und zeitintensiv, zumal auch noch über Zubringerdienste die Verpflegung an Bord gebracht werden muß.

Es ist daher Aufgabe der vorliegenden Erfindung, eine Einrichtung zur Verpflegung von Passagieren auf Flughäfen der obengenannten Art zur Verfügung zu stellen, die die obengenannten Nachteile beseitigt und einen wirtschaftlicheren Flugbetrieb, insbesondere im Kurzstreckenbereich ermöglicht.

Diese Aufgabe wird durch eine Einrichtung der o. g. Art mit den in Anspruch 1 gekennzeichneten Merkmalen gelöst.

Dazu ist es erfindungsgemäß vorgesehen, daß im Boardingbereich Einrichtungen zum Zuführen von Verpflegung an die Passagiere vorgesehen sind, wobei die Einrichtungen aus Verpflegung aufnehmenden Tragboxen bestehen, die an Bord des Fluggerätes bis nach dessen Landung verbleibend am Sitz im Innenraum des Fluggerätes gehaltert sind.

Dies hat den Vorteil, daß die kosten- und zeitaufwendige Bordverpflegung, wie auch die entsprechenden Einrichtung an Bord der Fluggeräte und entsprechende Servicezeiten am Boden zum Ausrüsten der Fluggeräte mit Bordverpflegung entfallen. Verpflegung bis nach der Landung und dem Verlassen der Passagiere des Fluggerätes verbleiben und dann erst eingesammelt und abtransportiert werden.

Vorzugsweise Weitergestaltungen der Anlage sind in den Unteransprüchen beschrieben.

So ergibt sich eine besonders wirtschaftliche und passagierfreundliche Anlage, wenn die Einrichtungen zum Zuführen von Lebensmitteln an die Passagiere in den Boardingbereich integriert sind.

Zweckmäßigerweise umfaßt dabei der Boardingbereich in vorteilhafter Weise einen Boardingschalter im Passagier-Wartebereich, ein Personentransportmittel, insbesondere einen Zubringerbus, welcher Passagiere vom Passagier-Abfertigungs- und Wartebereich zum Fluggerät befördert, eine Passagierbrücke, über welche Passagiere vom Passagier-Wartebereich zum Fluggerät gelangen und/oder eine Passagiertreppe, auf welcher Passagiere vom Rollfeld zum Fluggerät gelangen.

Die Verpflegung enthaltenen Trageboxen werden im Boardingbereich an die Passagiere verteilt, die dann die Trageboxen jeweils an ihren eigenen Sitzen oder den jeweils vorderen Sitzen befestigen, wo auch die Trageboxen nach dem Verzehr der Verpflegung bis nach der Landung und dem Verlassen der Passagiere des Fluggerätes verbleiben und dann erst eingesammelt und abtransportiert werden.

Ausführungsbeispiele der Erfindung werden nachstehend anhand der Zeichnungen näher erläutert. Es zeigen
- Fig. 1: in einem schematischen Grundriß die Einrichtung zur Verpflegung von Passagieren auf Flughäfen in Verbindung mit einer Flughafenanlage,
- Fig. 2: schematisch den Weg einer Tragebox für Bordverpflegung von der Ausgabestation bis zur Halterung am Sitz im Innenraum eines Fluggerätes und
- Fig. 3: eine schaubildliche Ansicht einer Tragebox.

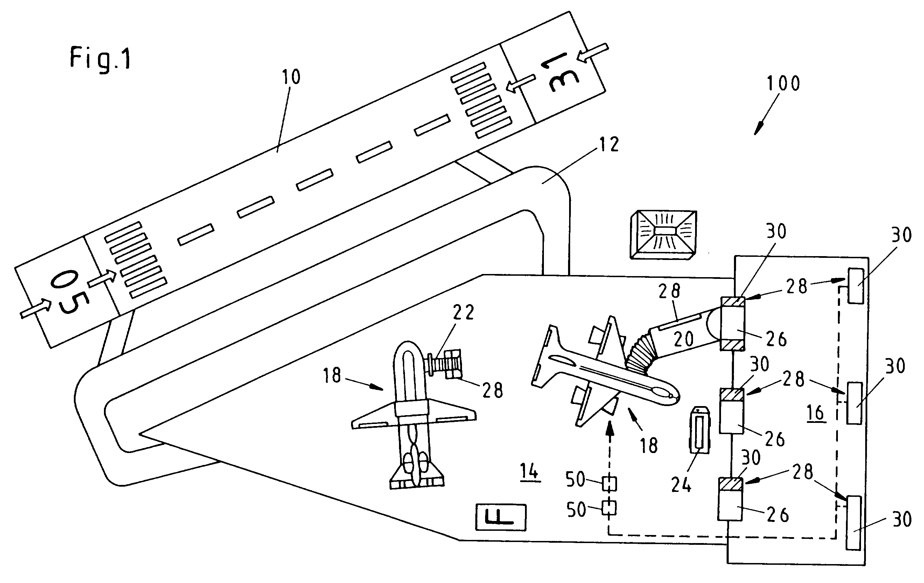

Die in Fig. 1 dargestellte Flughafenanlage 100 umfaßt einen Runway 10, einen Taxiway 12, ein Rollfeld 14, einen Passagier-Abfertigungs- und Wartebereich 16, auf dem Rollfeld 14 stehende Fluggeräte 18, Passagierbrücken 20, Passagiertreppen 22, Passagierbusse 24 und Boardingschalter 26. Der gesamte Bereich zwischen Passagier-Abfertigungs- und Wartebereich 16 und Flugzeugen 18, in dem sich Passagiere zum Besteigen von Fluggeräten 18 aufhalten wird hier als Boardingbereich bezeichnet und umfaßt insbesondere die Boardingschalter 26, die Passagierbrücken 20, -busse 24 und -treppen 22. Gegebenenfalls umfaßt dies auch Teile des Rollfeldes 14, wenn Passagiere zu Fuß von der Halle 16 zum Fluggerät 18 gehen. In diesen Bereichen sind zusätzlich Einrichtungen 28 zum Zuführen von Lebensmitteln an die Passagiere vorgesehen. Traditionell wird den Fluggästen an Bord von Flugzeugen je nach Flug

dauer eine mehr oder weniger reichliche Auswahl an Speisen und Getränken angeboten. Sofern es sich um Mittelfrist- oder Langstreckenflüge handelt (ab ca. 2,5 Stunden), ist dieser Service weitgehend problemlos. Unterhalb einer Flugdauer von ca. 2,5 Stunden (d.h. innerhalb Europas) ist diese Form der Kundenbetreuung jedoch umständlich, teuer und für die Wirtschaftlichkeit von Luftverkehrsgesellschaften schädlich.

Für alle Flüge innerhalb Europas, d.h. auf Kurzstrecken soll daher auf einen Verpflegungsservice dieser Art an Bord der Flugzeuge verzichtet. Statt dessen wird folgender neuer Weg vorgeschlagen:

Die Verköstigung der Passagiere wird auf den Zeitraum vor dem Abflug verlegt. Innerhalb der Flughafenanlagen schafft die Fluggesellschaft Möglichkeiten, d.h. Einrichtungen 28, mit denen die Passagiere in ggf. entsprechender exklusiver Umgebung mit Speisen und Getränken versorgt werden.

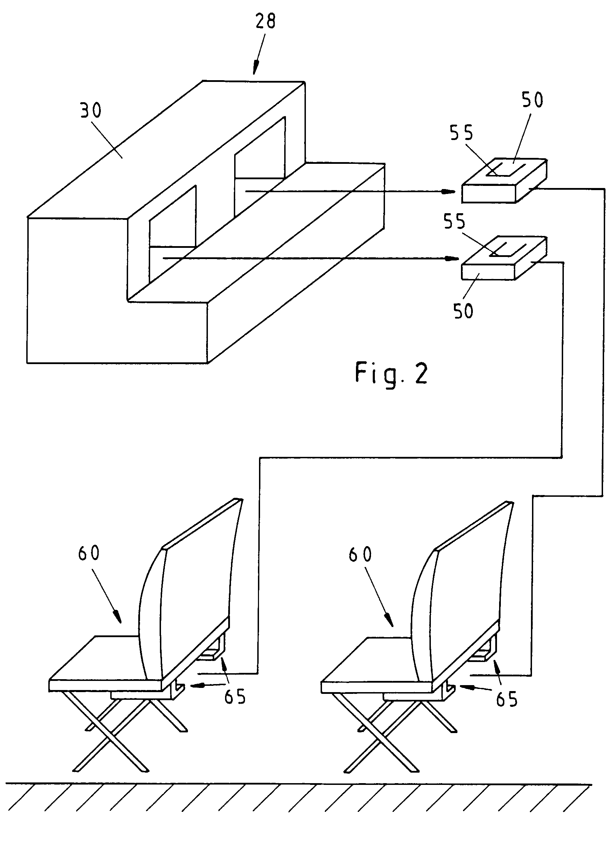

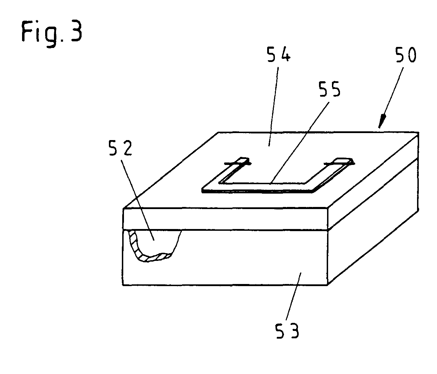

Diese Einrichtungen 28 bestehen aus die Verpflegung aufnehmenden Trageboxen 50, die von mindestens einer Ausgabestation 30 im Passagier-Wartebereich 16 ausgegeben, von den Passagieren mitgenommen und an Bord des Fluggerätes bis nach dessen Landung am Sitz 60 im Innenraum des Fluggerätes verbleiben, wobei an den Sitzen 60 Halterungen 65 für die Trageboxen 50 vorgesehen sind, vermittels der die Trageboxen 50 an den Sitzen verbleiben, bis diese eingesammelt und aus dem Fluggerät abtransportiert sind (Fig. 2 und 3).
Die Tragebox 50 besteht bevorzugterweise aus einem behälterartigen Formkörper 51 mit einem quadratischen oder rechteckförmigen Querschnitt, so daß die Tragebox in etwa die Form eines Quaders aufweist. Die Tragebox 50 besteht aus Kunststoff oder einem geeigneten Leichtmetall und besteht aus eine, schalenförmigen Bodenteil 53, dessen obere Öffnung 52 mittels eines Deckelteils 54 verschließbar ist. Das Deckelteil 54 ist über einen Rast- oder Schnapperverschluß mit dem Bodenteil 53 verbunden, so daß im geschlossenen Zustand der Tragebox sich deren Deckelteil nicht selbständig lösen kann.

Außenwandseitig ist das Deckelteil 54 mit einem Tragegriff 55 versehen, der in die Ebene der Deckelteilfläche einklappbar und aus dieser in die Gebrauchsstellung herausklappbar ist. Damit der Tragegriff 55 im eingeklappten Zustand nicht aus der Ebene der Deckelteilfläche herausragt, ist in der Außenwandfläche des Deckelteils 54 eine mit dem Tragegriff konturengleiche Vertiefung ausgebildet, in die der Tragegriff einklappbar ist. Auf diese Weise ist es möglich, die Trageboxen, falls erforderlich, mühelos auf kleinsten Raum zu stapeln. Sind darüber hinaus die obere Deckelteilwandfläche und die äußere untere Bodenteilwandfläche wechselweise auf der einen Wandfläche und auf der anderen Wandfläche mit Nocken und entsprechenden Vertiefungen versehen, dann lassen sich die Trageboxen zu in sich festen Gebinden zusammenstellen, die z.B. auf rollbaren Paletten aufgebaut, abtransportiert werden können. Das Einsammeln und Abtransportieren der Trageboxen 50 aus dem Innenraum des Fluggerätes und mühelos und ohne großen Zeitaufwand durchführbar.

Die Tragebox 50 besteht aus glasklarem oder aus einem undurchsichtigen oder opaken Kunststoff. Besonders vorteilhaft ist eine Trageboxenausgestaltung, nach der das Deckelteil 54 aus einem glasklaren Kunststoff und das Bodenteil 53 aus einem undurchsichtigen oder opaken Kunststoff besteht. Dadurch, daß das Deckelteil 54 bei dieser Ausführungsform aus einem glasklaren Kunststoff besteht, ist die Möglichkeit gegeben, seinen Inhalt mit einem Blick zu überprüfen, um festzustellen, ob die Box noch mit unangerührter Verpflegung gefüllt ist, oder ob die Box zum Reinigen und neuem Auffüllen abtransportiert werden kann.

Die Halterungen für die Trageboxen 50 an den Passagiersitzen 60 sind zum Einschieben, Aufhängen oder Einclippen ausgebildet.

Die Bordverpflegung in den Trageboxen kann vorgegeben sein, jedoch können die Passagiere sich einen Snack selbst zusammenstellen mit Speisen und Getränken eigener Wahl, die sie in der Tragebox mit an Bord nehmen. Während der Fluges dagegen widmen sich die Flugbegleiter im wesentlichen der Kommunikation mit den Fluggästen, z.B. durch: Betreuung von Fluggästen mit Flugangst; Betreuung von Kindern, Senioren, Behinderten etc.; Beantwortung von Fragen zum Flug selbst, zu Verspätungen, zu Anschlußflügen, zu Umbuchungen, zu Abholern, zu Hotel- und Mietwagenreservierungen, zu Gepäckweiterleitungen, zu Packages, etc.; Verkaufsgespräche zugunsten der Fluggesellschaft oder ähnliches.

Die Kosten für die Bordverpflegung im Kurzstreckenverkehr stehen in keinem Verhältnis zum Ertrag. Bei einer Verlagerung des Verpflegungsservices auf die Zeit vor dem Abflug und in von den passagieren mitzunehmenden Trageboxen können bei reduzierten Kosten die Qualität der Verpflegung gesteigert und die Kundenbindungsaspekte verstärkt werden. Die Flugzeit eines Kurzstreckenfluges kann zum Nutzen des Kunden und zum Nutzen der Fluggesellschaft mit Kommunikationsaspekten wesentlich besser genutzt werden als durch die Verabreichung von Verpflegung. Durch den Wegfall der für den Verpflegungsservice an Bord und am Boden erforderlichen Gerätschaften, Einrichtungen und Fahrzeugen steigt der Ertrag der Fluggesellschaft erheblich, selbst unter Berücksichtigung der zusätzlichen Restaurationseinrichtungen am Boden.
Durch den Wegfall des im Kurzstreckenflug entstehenden Zeitdrucks beim Service steigt die Flugsicherheit und die Sicherheit der Flugbegleiter. Durch Wegfall der Beladung des Flugzeugs mit Verpflegung können die Bodenzeiten des Flugzeugs soweit reduziert werden, daß mehr Flüge in geringeren Abständen angeboten werden können ohne Aufstockung der Besatzung und Flottengröße. Die Konzentration des Services an Bord auf im wesentlichen Kommunikationsaspekte steigert sich das Wohlbefinden der Passagiere erheblich, mit der Folge einer entsprechenden Kundenbindung an die Fluggesellschaft. Der Service am Boden eröffnet ein weitgefächertes Feld an Möglichkeiten zur Betreuung der Fluggäste bei gleichzeitig reduzierten Kosten. Die entsprechend gestaltete Verpflegung der Fluggäste vor dem Abflug trägt wesentlich zur Verringerung der Flugangst bei.

Nach einer weiteren Ausführungsform der Erfindung sind in den Fällen, in denen im Bereich der Passagierbrücken 20 Boardingschalter 26 nicht vorgesehen sind, die einzelnen Passagierbrücken 20 eingangs oder ausgangsseitig beim Einstieg in ein Flugzeug mit Einrichtungen 28 zum zuführen von Lebensmitteln an die Passagiere vorgesehen. Hier erfolgt die Kundenbetreuung quasi vor Ort und hat hohe wirtschaftliche Vorteile.

## Patentansprüche

1. Einrichtung zur Verpflegung von Passagieren auf Flughäfen mit einer Flughafenanlage (100) mit einem Passagier-Abfertigungs- und Wartebereich (16), einem Rollfeld (14), auf dem Fluggeräte (18) abstellbar sind, und einem Boardingbereich zwischen dem Passagier-Abfertigungs- und Wartebereich (16) und dem Fluggerät (18),
dadurch gekennzeichnet,
daß im Boardingbereich Einrichtungen (28) zum Zuführen von Verpflegung, wie Lebensmitteln und/oder für die Passagiere vorgesehen sind, wobei die Einrichtungen (28) aus Verpflegung aufnehmenden Trageboxen (50) bestehen, die an Bord des Fluggerätes bis nach dessen Landung verbleibend am Sitz (60) im Innenraum des Fluggerätes gehaltert sind.

2. Einrichtung nach Anspruch 1,
dadurch gekennzeichnet,
daß die Einrichtungen (28) zum Zuführen der Verpflegung an die Passagiere in den Boardingbereich integriert sind, der einen Boardingschalter (26) im Passagier-Wartebereich (16), ein Personentranportmittel (24), insbesondere einen Zubringerbus, welcher Passagiere vom Passagier-Abfertigungs- und Wartebereich (16) zum Fluggerät (18) befördert, eine Passagierbrücke (20), über welche Passagiere vom Passagier-Warte-bereich (16) zum Fluggerät (18) gelangen und/oder eine Passagiertreppe (22), auf welcher Passagiere vom Rollfeld (14) zum Fluggerät (18) gelangen, umfaßt, wobei im Passagier- Wartebereich (16) mindestens eine Trageboxen- Ausgabestation (30) vorgesehen ist.

3. Einrichtung nach einem der Ansprüche 1 und 2,
dadurch gekennzeichnet,
daß die Tragebox (50) aus einem behälterartigen Formkörper (51) mit einem quadratischen oder rechteckförmigen Querschnitt aus Kunststoff oder einem Leichtmetall mit einem die obere Behälteröffnung (52) verschließenden Deckelteil (54) besteht, das außenwandseitig mit einem in die Ebene der Deckelteilfläche ein- und ausklappbaren Tragegriff (55) versehen ist.

4. Einrichtung nach Anspruch 3,
dadurch gekennzeichnet,
daß die Tragebox (50) aus einem glasklarem Kunststoff besteht.

5. Einrichtung nach Anspruch 3,
dadurch gekennzeichnet,
daß die Tragebox (50) aus einem undurchsichtigen oder opaken Kunststoff besteht.

6. Einrichtung nach Anspruch 3,
dadurch gekennzeichnet,
daß das Deckelteil (54) der Tragebox (50) aus einem glasklaren Kunststoff und das Bodenteil (53) aus einem undurchsichtigen oder opaken Kunststoff bestehen.

7. Einrichtung nach einem der Ansprüche 1 bis 6,
dadurch gekennzeichnet,
daß zur Halterung der Trageboxen (50) an den Passagier-Sitzen (60) Halterungen (65) zum Einschieben, Aufhängen oder Einclippen der Trageboxen vorgesehen sind.
